# EUROPEAN PATENT APPLICATION

(11) **EP 4 686 196 A1**
(43) Date of publication of application: **28.01.2026**
(21) Application number: 24868605.7
(22) Date of filing: 12.09.2024
(51) Int. Cl.: H04N 13/363, H04N 13/322, G02B 30/25, G02B 30/35

(54) **DISPLAY SYSTEM INCLUDING ELECTRONIC DEVICE AND SCREEN**

(30) Priority: 19.09.2023 KR 20230124836
(71) Applicant: Samsung Electronics Co., Ltd., Suwon-si, Gyeonggi-do 16677 (KR)
(72) Inventor: CHUNG, Jaeseung, Suwon-si Gyeonggi-do 16677 (KR); MOON, Seokil, Suwon-si Gyeonggi-do 16677 (KR); SONG, Hoon, Suwon-si Gyeonggi-do 16677 (KR); AN, Jungkwuen, Suwon-si Gyeonggi-do 16677 (KR); LEE, Changkun, Suwon-si Gyeonggi-do 16677 (KR)
(74) Representative: Appleyard Lees IP LLP
(86) International application number: PCT/KR2024/013905
(87) International publication number: WO 2025/063627

(57) **Abstract**

A display system is provided. The display system includes an electronic device including a plurality of projectors emitting a light for providing a three-dimensional (3D) image, and a screen including a geometric phase layer and a retroreflection layer, the geometric phase layer refracts light incident from the plurality of projectors in different directions according to a polarization of the light and the retroreflection layer reflects light incident from the geometric phase layer in an opposite direction to an incident direction, wherein, based on the polarization of the light emitted from the plurality of projectors being a first polarization from among a right-circularly polarization and a left-circularly polarization, the emitted light is refracted in a first direction by the geometric phase layer, the light refracted in the first direction is reflected in an opposite direction to the first direction by the retroreflection layer, and the reflected light is refracted in a second direction toward a predetermined location corresponding to both eyes of a user by the geometric phase layer, and wherein, based on the polarization of the light emitted from the plurality of projectors being a second polarization, the emitted light is refracted in a third direction different from the first direction by the geometric phase layer, the light refracted in the third direction is reflected in an opposite direction to the third direction by the retroreflection layer, and the reflected light is refracted in a fourth direction different from the second direction by the geometric phase layer.

## Description

### [Technical Field]

The disclosure relates to a display system including an electronic device and a screen. More particularly, the disclosure relates to a display system that can project and provide a three-dimensional (3D) image.

### [Background Art]

Recently, development of a technology regarding an electronic device that can project an image, i.e., a so-called projector is accelerating. In particular, recently, various types of projectors such as a portable or movable projector that can freely project an image without a restriction on a location, an ultra short focus projector that can project an image on a screen even in case the distance from the screen is very short, etc. are being provided.

Not only that, recently, a technology regarding a 3D projector that can provide 3D images is gaining attention, but up to now, there are actually a lot of restrictions on implementing a 3D image by a projection method.

For example, as a conventional technology, there is a technology of providing a 3D image by using 3D-dedicated glasses together with a projector, but regarding this conventional technology, since a user is made to view an image while wearing 3D-dedicated glasses, limitations that the user's convenience is caused and the brightness of the image may be lost are pointed out.

Meanwhile, as a conventional technology, there is a technology of providing a 3D image by including a retroreflector in a screen without requesting a user to wear dedicated glasses, but regarding this conventional technology, since a method of diffusing a light emitted from a projector is used, a limitation that there is a very big loss of brightness is pointed out.

The above information is presented as background information only to assist with an understanding of the disclosure. No determination has been made, and no assertion is made, as to whether any of the above might be applicable as prior art with regard to the disclosure.

### [Disclosure]

### [Technical Solution]

Aspects of the disclosure are to address at least the above-mentioned problems and/or disadvantages and to provide at least the advantages described below. Accordingly, an aspect of the disclosure is to provide a display system that can project and provide a 3D image, and at the same time, minimize a loss of brightness.

Additional aspects will be set forth in part in the description which follows and, in part, will be apparent from the description, or may be learned by practice of the presented embodiments.

In accordance with an aspect of the disclosure, a display system is provided. The display system includes an electronic device including a plurality of projectors emitting a light for providing a three-dimensional (3D) image, and a screen including a geometric phase layer and a retroreflection layer, the geometric phase layer refracts light incident from the plurality of projectors in different directions according to a polarization of the light and the retroreflection layer reflects light incident from the geometric phase layer in an opposite direction to an incident direction, wherein, based on the polarization of the light emitted from the plurality of projectors being a first polarization from among a right-circularly polarization and a left-circularly polarization, the emitted light is refracted in a first direction by the geometric phase layer, the light refracted in the first direction is reflected in an opposite direction to the first direction by the retroreflection layer, and the reflected light is refracted in a second direction toward a predetermined location corresponding to both eyes of a user by the geometric phase layer, and wherein, based on the polarization of the light emitted from the plurality of projectors being a second polarization, the emitted light is refracted in a third direction different from the first direction by the geometric phase layer, the light refracted in the third direction is reflected in an opposite direction to the third direction by the retroreflection layer, and the reflected light is refracted in a fourth direction different from the second direction by the geometric phase layer.

Meanwhile, based on the polarization of the light emitted from the plurality of projectors being the first polarization, the emitted light is refracted in the first direction as it is changed to the second polarization by the geometric phase layer, the light refracted in the first direction is reflected in the opposite direction to the first direction as it is changed to the first polarization by the retroreflection layer, and the reflected light is refracted in the second direction toward the predetermined location corresponding to both eyes of the user as it is changed to the second polarization by the geometric phase layer, and based on the polarization of the light emitted from the plurality of projection units being the second polarization, the emitted light is refracted in the third direction as it is changed to the first polarization by the geometric phase layer, the light refracted in the third direction is reflected in the opposite direction to the third direction as it is changed to the second polarization by the retroreflection layer, and the reflected light is refracted in the fourth direction as it is changed to the first polarization by the geometric phase layer.

Meanwhile, the electronic device may further include a polarizer that filters light of the second polarization emitted from the plurality of projectors.

Meanwhile, the screen may further include a first quarter-wave plate (QWP) that is arranged between the geometric phase layer and the retroreflection layer and adjusts the polarization of the light incident from the retroreflection layer, based on the polarization of light incident into the first quarter-wave plate after being reflected by the retroreflection layer being the second polarization, the polarization of the light incident into the first quarter-wave plate is adjusted to the first polarization, and light incident into the geometric phase layer after being adjusted to the first polarization by the first quarter-wave plate is refracted in a fifth direction similar to the second direction.

Meanwhile, the screen may further include a second quarter-wave plate that is arranged between the geometric phase layer and the retroreflection layer and adjusts the polarization of the light incident from the geometric phase layer, based on the polarization of light incident into the second quarter-wave plate after being refracted by the geometric phase layer being the first polarization, the polarization of the light incident into the second quarter-wave plate is adjusted to the second polarization, the light adjusted to the second polarization by the second quarter-wave plate is reflected in an opposite direction to the third direction as it is adjusted to the first polarization by the retroreflection layer, and the light reflected in the opposite direction to the third direction by the retroreflection layer is refracted in the fifth direction as it is adjusted to the second polarization by the geometric phase layer.

Meanwhile, the first direction, the second direction, the third direction, and the fourth direction is set based on at least one of a form, a size, or an interval of a pattern formed on the geometric phase layer.

Meanwhile, the predetermined location corresponds to an eyebox that is an area corresponding to both eyes of the user, and the location, the size, and the form of the eyebox is set based on at least one of a focal distance of a lens included in the electronic device, an optical aberration of the lens, or a size of an aperture included in the electronic device.

Meanwhile, the location, the size, and the form of the eyebox is set based on at least one of a form, a size, or an interval of a pattern formed on the retroreflection layer.

Meanwhile, the display system may further include a display device that displays an image, and the screen may be arranged on at least some areas of a display included in the display device.

Meanwhile, the at least some areas may be included in an area wherein a black matrix is formed on the display.

Meanwhile, the screen may be arranged on at least two surfaces among a front surface, a left side surface, a right side surface, a ceiling surface, and a bottom surface of the electronic device.

Meanwhile, the electronic device, based on receiving a request for providing a two-dimensional (2D) image, emits a light of a higher luminance than in a case of providing the 3D image.

Meanwhile, the plurality of projectors include a first projector that emits a light for providing to a left eye of a first user and a second projector that emits a light for providing to a right eye of the first user.

Meanwhile, the display system may further include an external device including a plurality of external projectors that emit a light corresponding to a 3D image, the plurality of external projectors including a first projector that emits a light for providing to a left eye of a second user and a second projector that emits a light for providing to a right eye of the second user, and the external device is arranged in a different location from the electronic device.

In accordance with another aspect of the disclosure, a display device is provided. The display device includes a display, memory storing at least one instruction, and one or more processors communicatively coupled to the display and the memory, wherein the display may include a screen that is arranged in at least some areas of the display and includes a geometric phase layer and a retroreflection layer, the geometric phase layer refracts a light incident from a plurality of projectors included in an electronic device in different directions according to a polarization of the light and the retroreflection layer reflects light incident from the geometric phase layer in an opposite direction to an incident direction, wherein, based on the polarization of the light emitted from the plurality of projectors being a first polarization from among a right-circularly polarization and a left-circularly polarization, the emitted light is refracted in a first direction by the geometric phase layer, the light refracted in the first direction is reflected in an opposite direction to the first direction by the retroreflection layer, and the reflected light is refracted in a second direction toward a predetermined location corresponding to both eyes of a user by the geometric phase layer, and wherein, based on the polarization of the light emitted from the plurality of projectors being a second polarization, the emitted light is refracted in a third direction different from the first direction by the geometric phase layer, the light refracted in the third direction is reflected in an opposite direction to the third direction by the retroreflection layer, and the reflected light is refracted in a fourth direction different from the second direction by the geometric phase layer.

Meanwhile, based on the polarization of the light emitted from the plurality of projectors being the first polarization, the emitted light is refracted in the first direction as it is changed to the second polarization by the geometric phase layer, the light refracted in the first direction is reflected in an opposite direction to the first direction as it is changed to the first polarization by the retroreflection layer, and the reflected light is refracted in the second direction toward the predetermined location corresponding to both eyes of the user as it is changed to the second polarization by the geometric phase layer, and wherein, based on the polarization of the light emitted from the plurality of projectors being the second polarization, the emitted light is refracted in the third direction as it is changed to the first polarization by the geometric phase layer, the light refracted in the third direction is reflected in an opposite direction to the third direction as it is changed to the second polarization by the retroreflection layer, and the reflected light is refracted in the fourth direction as it is changed to the first polarization by the geometric phase layer.

Meanwhile, the at least some areas are included in an area wherein a black matrix is formed on the display.

Meanwhile, the screen may further include a first quarter-wave plate (QWP) that is arranged between the geometric phase layer and the retroreflection layer and adjusts the polarization of the light incident from the retroreflection layer, and based on the polarization of the light incident into the first quarter-wave plate after being reflected by the retroreflection layer being the second polarization, the polarization of the light incident into the first quarter-wave plate is adjusted to the first polarization, and the light incident into the geometric phase layer after being adjusted to the first polarization by the first quarter-wave plate is refracted in a fifth direction similar to the second direction.

Meanwhile, the screen may further include a second quarter-wave plate that is arranged between the geometric phase layer and the retroreflection layer and adjusts the polarization of the light incident from the geometric phase layer, and based on the polarization of the light incident into the second quarter-wave plate after being refracted by the geometric phase layer being the first polarization, the polarization of the light incident into the second quarter-wave plate is adjusted to the second polarization, the light adjusted to the second polarization by the second quarter-wave plate is reflected in an opposite direction to the third direction as it is adjusted to the first polarization by the retroreflection layer, and the light reflected in the opposite direction to the third direction by the retroreflection layer is refracted in the fifth direction as it is adjusted to the second polarization by the geometric phase layer.

Meanwhile, the first direction, the second direction, the third direction, and the fourth direction are set based on at least one of a form, a size, or an interval of a pattern formed on the geometric phase layer.

Other aspects, advantages, and salient features of the disclosure will become apparent to those skilled in the art from the following detailed description, which, taken in conjunction with the annexed drawings, discloses various embodiments of the disclosure.

### [Description of Drawings]

The above and other aspects, features, and advantages of certain embodiments of the disclosure will be more apparent from the following description taken in conjunction with the accompanying drawings, in which:
FIG. 1 is a block diagram schematically illustrating a configuration of a display system according to an embodiment of the disclosure;
FIG. 2 is a diagram illustrating a moving route of a light according to an embodiment of the disclosure;
FIG. 3 is a block diagram illustrating in detail a configuration of a display system according to an embodiment of the disclosure;
FIG. 4 is a diagram illustrating a moving route of a light wherein an electronic device further includes a polarizer according to an embodiment of the disclosure;
FIG. 5 is a diagram illustrating a route of a light wherein a screen further includes a quarter-wave plate according to an embodiment of the disclosure;
FIG. 6 is a block diagram schematically illustrating a configuration of a display device according to an embodiment of the disclosure;
FIG. 7 is a diagram illustrating arrangement of a screen on a display included in a display device according to an embodiment of the disclosure; and
FIG. 8 is a diagram illustrating arrangement of a screen on a plurality of wall surfaces constituting a viewing space of a user according to an embodiment of the disclosure.

Throughout the drawings, it should be noted that like reference numbers are used to depict the same or similar elements, features, and structures.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Also, in the disclosure, expressions such as "have," "may have," "include," and "may include" denote the existence of such characteristics (e.g.: elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to,'' "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a central processing unit (CPU) or an application processor) that can perform the corresponding operations by executing one or more software programs stored in a memory device.

Also, in the embodiments of the disclosure, 'a module' or 'a unit' may perform at least one function or operation, and may be implemented as hardware or software, or as a combination of hardware and software. In addition, a plurality of 'modules' or 'units' may be integrated into at least one module and implemented as at least one processor, excluding 'a module' or 'a unit' that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings, such that a person having ordinary knowledge in the technical field to which the disclosure belongs can easily carry out the disclosure.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a fingerprint sensor controller, a display driver integrated circuit (IC), an audio CODEC chip, a universal serial bus (USB) controller, a camera controller, an image processing IC, a microprocessor unit (MPU), a system on chip (SoC), an IC, or the like.

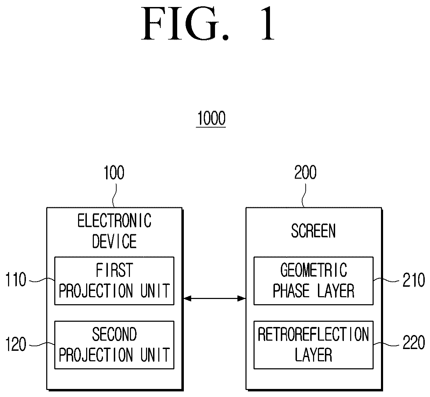

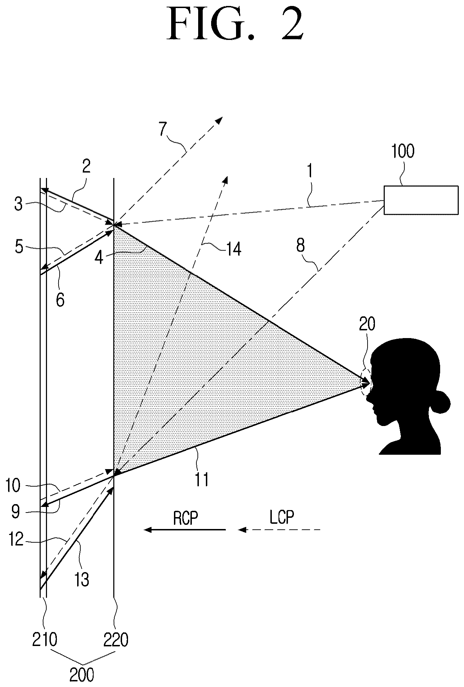

FIG. 1 is a block diagram schematically illustrating a configuration of a display system according to an embodiment of the disclosure, and FIG. 2 is a diagram illustrating a moving route of a light according to an embodiment of the disclosure.

Referring to FIG. 1, a display system 1000 may include an electronic device 100 and a screen 200.

'The electronic device 100' according to the disclosure refers to a device that can project an image on the screen 200. For example, the electronic device 100 may not only be implemented as a device of a type referred to as a beam projector or a projector, etc., but may also be implemented as projection units are mounted on devices of various types such as a smartphone, a tablet personal computer (PC), a robot, etc. That is, there is no special limitation on the type of the electronic device 100 according to the disclosure.

The electronic device 100 may include a plurality of projection units 110, 120 emitting a light for providing a 3D image. 'A projection unit' refers to a component that emits a light corresponding to an image for projecting the image on the screen 200, and the plurality of projection units 110, 120 are needed for projecting a 3D image on the screen 200. Here, the term 'emit' may be replaced by a term such as 'radiate,' etc.

Specifically, the plurality of projection units 110, 120 may include 'a first projection unit 110' that emits a light for providing to a left eye of a user and 'a second projection unit 120' that emits a light for providing to a right eye of the user. Meanwhile, the number of the plurality of projection units 110, 120 may be increased to expand the volume of an eyebox 20 that will be described below or to correspond to a plurality of users. Each of the plurality of projection units 110, 120 may include various detailed components such as a light source, a projection lens, a reflector, etc.

The plurality of projection units 110, 120 may be implemented by various projection methods (e.g., a cathode-ray tube (CRT) method, a liquid crystal display (LCD) method, a digital light processing (DLP) method, a laser method, etc.). As an example, the CRT method has basically the same principle as a CRT monitor. In the CRT method, an image is enlarged to a lens in front of a cathode-ray tube (CRT), and the image is displayed on the screen 200. According to the number of cathode-ray tubes, the CRT method is divided into a one-tube method and a three-tube method, and in the case of the three-tube method, the method may be implemented while cathode-ray tubes of red, green, and blue colors are separated from one another.

As another example, the LCD method is a method of displaying an image by making a light output from a light source pass through a liquid crystal display. The LCD method is divided into a single-plate method and a three-plate method, and in the case of the three-plate method, a light output from a light source may be divided into red, green, and blue colors in a dichroic mirror (a mirror that reflects only lights of specific colors, and makes the rest pass through), and pass through a liquid crystal display, and then the lights may be gathered in one place.

As still another example, the DLP method is a method of displaying an image by using a digital micromirror device (DMD) chip. A projection part by the DLP method may include a light source, a color wheel, a DMD chip, a projection lens, etc. A light output from the light source may show a color as it passes through the rotating color wheel. The light that passed through the color wheel is input into the DMD chip. The DMD chip includes numerous micromirrors, and reflects the light input into the DMD chip. The projection lens may perform a role of enlarging the light reflected from the DMD chip to an image size.

As still another example, the laser method includes a diode pumped solid state (DPSS) laser and a galvanometer. As lasers outputting various colors, lasers wherein three DPSS lasers are installed for each of red (R), green (G), and blue (B) colors, and then their optical axes are overlapped by using a special mirror are used. The galvanometer includes a mirror and a motor of a high output, and moves the mirror at a fast speed. For example, the galvanometer may rotate the mirror at 40 KHz/sec at the maximum. The galvanometer is mounted according to a scanning direction, and in general, a projector performs plane scanning, and thus the galvanometer may also be arranged while being divided into x and y axes.

Meanwhile, the plurality of projection units 110, 120 may include light sources of various types. For example, the plurality of projection units 110, 120 may include at least one light source among a lamp, an LED, and a laser.

The plurality of projection units 110, 120 may output an image in a screen ratio of 4:3, a screen ratio of 5:4, and a wide screen ratio of 16:9 according to the use of the electronic device 100 or the user's setting, etc., and output a light corresponding to the image in various resolutions such as wide video graphics array (WVGA) (854*480), super video graphics array (SVGA) (800*600), extended graphics array (XGA) (1024*768), wide extended graphics array (WXGA) (1280*720), WXGA (1280*800), super extended graphics array (SXGA) (1280*1024), ultra extended graphics array (UXGA) (1600*1200), Full high definition (HD) (1920*1080), etc. according to screen ratios.

Meanwhile, the plurality of projection units 110, 120 may perform various functions for adjusting an output image (i.e., an image projected on the screen 200). For example, the plurality of projection units 110, 120 may perform functions such as zoom, keystone, quick corner (four corner) keystone, lens shift, etc., and adjust the size and the form, etc. of an output image.

'The screen 200' refers to a component that can reflect a light emitted through the plurality of projection units 110, 120 and provide the light to the user. In particular, the screen 200 may reflect a light emitted through the plurality of projection units 110, 120 and provide a 3D image to the user. The screen 200 may be fixedly attached to a wall or an object in a viewing space, or may be implemented such that location movement or rolling is possible. There is no special limitation on the type of the screen 200 according to the disclosure. The screen 200 may include a geometric phase layer 210 and a retroreflection layer 220.

'The geometric phase layer 210' refers to a component that can refract an incident light in different directions according to a polarization of the light. The geometric phase layer 210 may perform the role of a lens that focuses an incident light to an area or a dot according to the polarization of the light, or makes the light spread on a boundary surface of the geometric phase layer 210. In particular, the geometric phase layer 210 according to the disclosure may perform the role of a prism that refracts an incident light in different directions according to the polarization of the light.

The geometric phase layer 210 may indicate different optical characteristics according to a polarization of a light. The geometric phase layer 210 may be implemented as a flat type unlike a general convex lens or a general concave lens, and accordingly, it may also be referred to as 'a phase plate.' Other than the geometric phase layer 210, any component that can refract an incident light in different directions according to the polarization of the light can be used in place of the geometric phase layer 210 according to the disclosure. The geometric phase layer 210 may be briefly referred to as 'a first layer,' and may also be referred to as terms such as 'a geometric phase film,' 'a geometric phase lens,' 'a geometric phase prism,' or 'a geometric phase modulation,' etc.

The geometric phase layer 210 may include a surface that has a specific pattern or structure. Also, when a light passes through the geometric phase layer 210, the phase of the light may change by diffraction according to the specific pattern or structure, and accordingly, the wave characteristic of the light may change. In addition, when the light that passed through the geometric phase layer 210 interacts with another substance or passes through another layer, a specific optical effect may be exerted. Such an optical effect may be utilized in performing a desired operation in an optical system by changing the route of the light to a specific direction or controlling the phase structure of the light.

In particular, the geometric phase layer 210 according to the disclosure may refract an incident light from the plurality of projection units 110, 120 in different directions according to the polarization of the light, and additionally adjust the polarization of the incident light. Specifically, if the polarization of the incident light is a right-circularly polarization (RCP), the geometric phase layer 210 may adjust the polarization to a left-circularly polarization (LCP), and if the polarization of the incident light is a left-circularly polarization, the geometric phase layer 210 may adjust the polarization to a right-circularly polarization. In the disclosure, the term 'adjustment' may be replaced by terms such as transformation, change or alteration, or modulation, etc.

In the disclosure, 'a right-circularly polarization' refers to a polarization that rotates in a clockwise direction based on a proceeding direction of a light, and 'a left-circularly polarization' refers to a polarization that rotates in a counterclockwise direction based on a proceeding direction of a light.

'The retroreflection layer 220' refers to a component that can reflect a light in an opposite direction to an incident direction of the light. Specifically, the retroreflection layer 220 may reflect an incident light an opposite direction to the incident direction such that the light proceeds in a route which is in parallel to the route of the light incident from the geometric phase layer 210 and of which direction is opposite.

There is no special limitation on the type of the retroreflection layer 220, but for example, the retroreflection layer may be implemented as one of a corner cube retroreflection layer 220 or a spherical retroreflection layer 220.

The corner cube retroreflection layer 220 refers to a retroreflection layer 220 in a cube shape consisting of three reflective surfaces. The corner cube retroreflection layer 220 may reflect a light in an opposite direction to the incident direction based on a combination of the three reflective surfaces that are perpendicular to one another. The spherical retroreflection layer 220 may reflect a light in an opposite direction to the incident direction based on a curved surface in a lens shape.

As the material of the retroreflection layer 220, aluminum, silver, or anisotropic scattering materials for scattering a light in a specific direction, etc. may be used, but there is no special limitation on the material of the retroreflection layer 220. Meanwhile, the retroreflection layer 220 may also be referred to as terms such as 'a second layer' or 'a retroreflection film,' etc.

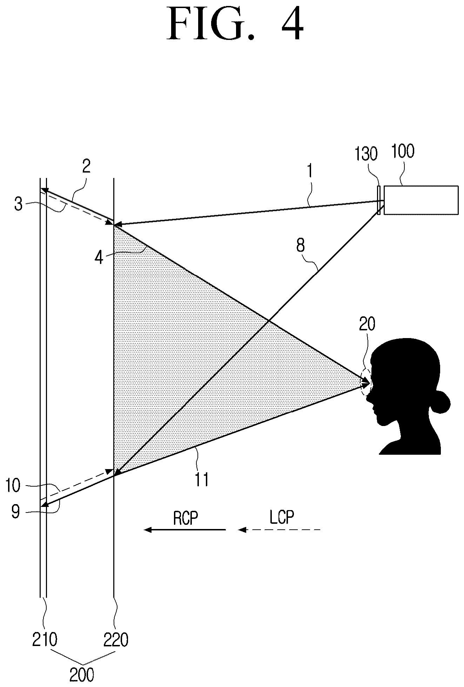

Hereinafter, a moving route of a light according to an embodiment of the disclosure will be described in detail with reference to FIG. 2. The arrows in FIG. 2 indicate a proceeding route of a light or 'a ray,' and in FIG. 2, numbers from 1 to 14 were described for each arrow for distinguishing each of proceeding routes of a light. Such a method of expressing a proceeding route of a light was not only used in FIG. 2, but also in FIGS. 4, 5, and 8.

Referring to FIG. 2, only route 1 and route 8 were illustrated as routes of a light emitted through the plurality of projection units 110, 120, but this is only for the convenience of explanation, and an actual light emitted through the plurality of projection units 110, 120 may be incident into the screen 200 through countless routes in an area between the route 1 and the route 8.

Meanwhile, in FIG. 2, the geometric phase layer 210 and the retroreflection layer 220 were illustrated to be spaced from each other, but this only illustrated a route of a light that passes through the geometric phase layer 210 and the retroreflection layer 220 clearly, and the geometric phase layer 210 may be stacked on the retroreflection layer 220. That is, the geometric phase layer 210 and the retroreflection layer 220 may respectively be implemented as a film form, and implemented to contact each other. However, it is obviously possible that an interval exists between the geometric phase layer 210 and the retroreflection layer 220, or another layer is arranged between the geometric phase layer 210 and the retroreflection layer 220.

According to an embodiment, if a polarization of a light emitted from the plurality of projection units 110, 120 is a first polarization from among a right-circularly polarization and a left-circularly polarization, the emitted light may be refracted in a first direction by the geometric phase layer 210, and the light refracted in the first direction may be reflected in an opposition direction to the first direction by the retroreflection layer 220, and the reflected light may be refracted in a second direction toward a predetermined location corresponding to both eyes of a user by the geometric phase layer 210.

In contrast, if a polarization of the light emitted from the plurality of projection units 110, 120 is a second polarization, the emitted light may be refracted in a third direction different from the first direction by the geometric phase layer 210, and the light refracted in the third direction may be reflected in an opposition direction to the third direction by the retroreflection layer 220, and the reflected light may be refracted in a fourth direction different from the second direction by the geometric phase layer 210.

Specifically, if the polarization of the light emitted from the plurality of projection units 110, 120 is the first polarization, the emitted light may be refracted in the first direction as it is changed to the second polarization by the geometric phase layer 210, and the light refracted in the first direction may be reflected in an opposite direction to the first direction as it is changed to the first polarization by the retroreflection layer 220, and the reflected light may be refracted in the second direction toward the predetermined location corresponding to both eyes of the user as it is changed to the second polarization by the geometric phase layer 210. In contrast, if the polarization of the light emitted from the plurality of projection units 110, 120 is the second polarization, the emitted light may be refracted in the third direction as it is changed to the first polarization by the geometric phase layer 210, and the light refracted in the third direction may be reflected in an opposite direction to the third direction as it is changed to the second polarization by the retroreflection layer 220, and the reflected light may be refracted in the fourth direction as it is changed to the first polarization by the geometric phase layer 210.

Here, 'the predetermined location' refers to the location of the eyebox 20 which is an area corresponding to both eyes of the user. 'The eyebox 20' is an area corresponding to both eyes of the user, and it may be a target reaching point of a light corresponding to a 3D image in case a 3D image is projected. The eyebox 20 may include a left eyebox 20 corresponding to the left eye of the user and a right eyebox 20 corresponding to the right eye of the user. The term eyebox 20 may be replaced by a term such as 'a viewing box,' 'a viewport,' or 'a target point,' etc.

The location of the eyebox 20 may be determined as a point that makes a 3D image have an appropriate depth and a stereoscopic effect. The size of the eyebox 20 provides a wider viewing angle to the user as it is bigger, but it is preferable that the size is determined in consideration of the fact that a crosstalk between the left and right eyeboxes 20 may be caused if the size of the eyebox 20 is too big. Also, it is preferable that the form of the eyebox 20 is determined in consideration of a view and a movement, etc. of the user.

For example, the location, the size, and the form of the eyebox 20 may be set based on at least one of a focal distance of a lens included in the electronic device 100, an optical aberration of the lens, or a size of an aperture included in the electronic device 100. In addition, the location, the size, and the form of the eyebox 20 may also be set based on at least one of a form, a size, or an interval of a pattern formed on the retroreflection layer 220. Other than the above, various factors such as the distance between the screen 200 and the electronic device 100, etc. may be used in determining the location, the size, and the form of the eyebox 20.

In the description regarding the disclosure, 'the first polarization' is used as a term for referring to one of a right-circularly polarization or a left-circularly polarization, and 'the second polarization' is used as a term for referring to the other different from the first polarization from among a right-circularly polarization or a left-circularly polarization. That is, if the first polarization if a right-circularly polarization, the second polarization may be a left-circularly polarization, and if the first polarization is a left-circularly polarization, the second polarization may be a right-circularly polarization.

'The first direction' is a term for specifying a refracting direction of a light incident in a direction toward the geometric phase layer 210 from the plurality of projection units 110, 120 in case the polarization of the light emitted from the plurality of projection units 110, 120 is the first polarization. That is, a light of the first polarization emitted from the plurality of projection units 110, 120 may be refracted in the first direction by the geometric phase layer 210.

'The second direction' is a term for specifying a refracting direction of a light incident in a direction toward the geometric phase layer 210 from the retroreflection layer 220 in case the polarization of the light emitted from the plurality of projection units 110, 120 is the first polarization. That is, a light of the first polarization reflected by the retroreflection layer 220 may be refracted in the second direction toward the predetermined location corresponding to both eyes of the user by the geometric phase layer 210.

'The third direction' is a term for specifying a refracting direction of a light incident in a direction toward the geometric phase layer 210 from the plurality of projection units 110, 120 in case the polarization of the light emitted from the plurality of projection units 110, 120 is the second polarization. That is, a light of the second polarization emitted from the plurality of projection units 110, 120 may be refracted in the second direction by the geometric phase layer 210.

'The fourth direction' is a term for specifying a refracting direction of a light incident in a direction toward the geometric phase layer 210 from the retroreflection layer 220 in case the polarization of the light emitted from the plurality of projection units 110, 120 is the second polarization. That is, a light of the second polarization reflected by the retroreflection layer 220 may be refracted in the fourth direction which is not a direction toward the predetermined location corresponding to both eyes of the user by the geometric phase layer 210.

The terms 'a first direction, a second direction, a third direction, and a fourth direction' defined above may also be replaced by terms which are 'a first angle, a second angle, a third angle, and a fourth angle.'

The first direction, the second direction, the third direction, and the fourth direction may be set based on at least one of a form, a size, or an interval of a pattern formed on the geometric phase layer 210. For example, manufacture of the geometric phase layer 210 may include a process of forming a pattern (an interference pattern) on a substrate, and arranging a liquid crystal on the area wherein the pattern is formed. Here, the arrangement of the liquid crystal varies according to the form, the size, and the interval of the pattern, and accordingly, a refraction angle of a light that passes through the geometric phase layer 210 may be determined.

Also, a refraction angle of a light that passes through the geometric phase layer 210 may be adjusted by attaching a prism sheet, etc. on the geometric phase layer 210, or adjusting at least one of the form, the size, or the interval of the pattern formed on the retroreflection layer 220.

That is, a refraction angle of a light that passes through the geometric phase layer 210 may vary according to the design of the developer that considered various factors including the specification of the projection units and the viewing distance. However, hereinafter, for the convenience of explanation, explanation will be described based on the premise that a refraction angle of the geometric phase layer 210 was set as in the following two matters. However, it is obvious that a refraction angle of the geometric phase layer 210 can be set differently from the premise below.

First, it will be assumed that, in case a light is incident in a direction toward the geometric phase layer 210 from the plurality of projection units 110, 120, if the polarization of the incident light is a left-circularly polarization, the light is refracted by a predetermined angle which is upward based on the incident angle, and if the polarization of the incident light is a right-circularly polarization, the light is refracted by a predetermined angle which is downward based on the incident angle.

Second, in case a light is incident in a direction toward the geometric phase layer 210 from the retroreflection layer 220, the refracting direction according to the polarization of the light becomes contrary to a case wherein a light is incident in a direction toward the geometric phase layer 210 from the plurality of projection units 110, 120. That is, hereinafter, it will be assumed that, in case a light is incident in a direction toward the geometric phase layer 210 from the retroreflection layer 220, if the polarization of the incident light is a left-circularly polarization, the light is refracted by a predetermined angle which is downward based on the incident angle, and if the polarization of the incident light is a right-circularly polarization, the light is refracted by a predetermined angle which is upward based on the incident angle. A specific refraction angle may vary according to the design of the geometric phase layer 210 as described above.

Meanwhile, in the description regarding FIG. 2, explanation will be described based on the premise of a case wherein the first polarization is a left-circularly polarization (i.e., an LCP), and the second polarization is a right-circularly polarization (i.e., an RCP).

First, the route of the light in FIG. 2 will be explained by assuming a case wherein a polarization of a light emitted through the plurality of projection units 110, 120 is a right-circularly polarization.

As illustrated in FIG. 2, a light emitted from the plurality of projection units 110, 120 may be incident into the geometric phase layer 210 through a route 1. If the polarization of the light incident into the geometric phase layer 210 through the route 1 is a right-circularly polarization, the light incident into the geometric phase layer 210 through the route 1 may be refracted in the third direction, i.e., the direction of a route 5 as it is adjusted to a left-circularly polarization. The light incident into the retroreflection layer 220 through the route 5 may be reflected in the direction of a route 6 as it is adjusted to a right-circularly polarization by the retroreflection layer 220. The light incident into the geometric phase layer 210 through the route 6 may be refracted in the fourth direction, i.e., the direction of a route 7 as it is adjusted to a left-circularly polarization. Accordingly, the light may be provided in a direction different from the eyebox 20 along the direction of the route 7.

As illustrated in FIG. 2, the light emitted from the plurality of projection units 110, 120 may be incident into the geometric phase layer 210 through the route 8. If the polarization of the light incident into the geometric phase layer 210 through the route 8 is a right-circularly polarization, the light incident into the geometric phase layer 210 through the route 8 may be refracted in the third direction, i.e., the direction of a route 12 as it is adjusted to a left-circularly polarization. The light incident into the retroreflection layer 220 through the route 12 may be reflected in the direction of a route 13 as it is adjusted to a right-circularly polarization by the retroreflection layer 220. The light incident into the geometric phase layer 210 through the route 13 may be refracted in the fourth direction, i.e., the direction of a route 14 as it is adjusted to a left-circularly polarization. Accordingly, the light may be provided in a direction different from the eyebox 20 along the direction of the route 14.

Next, the route of the light in FIG. 2 will be explained by assuming a case wherein a polarization of a light emitted through the plurality of projection units 110, 120 is a left-circularly polarization.

As illustrated in FIG. 2, a light emitted from the plurality of projection units 110, 120 may be incident into the geometric phase layer 210 through the route 1. If the polarization of the light incident into the geometric phase layer 210 through the route 1 is a left-circularly polarization, the light incident into the geometric phase layer 210 through the route 1 may be refracted in the first direction, i.e., the direction of a route 2 as it is adjusted to a right-circularly polarization. The light incident into the retroreflection layer 220 through the route 2 may be reflected in the direction of a route 3 as it is adjusted to a left-circularly polarization by the retroreflection layer 220. The light incident into the geometric phase layer 210 through the route 3 may be refracted in the second direction, i.e., the direction of a route 4 as it is adjusted to a right-circularly polarization. Accordingly, the light may be provided in a direction of the predetermined eyebox 20 along the direction of the route 4.

As illustrated in FIG. 2, the light emitted from the plurality of projection units 110, 120 may be incident into the geometric phase layer 210 through the route 8. If the polarization of the light incident into the geometric phase layer 210 through the route 8 is a left-circularly polarization, the light incident into the geometric phase layer 210 through the route 8 may be refracted in the first direction, i.e., the direction of a route 9 as it is adjusted to a right-circularly polarization. The light incident into the retroreflection layer 220 through the route 9 may be reflected in the direction of a route 10 as it is adjusted to a left-circularly polarization by the retroreflection layer 220. The light incident into the geometric phase layer 210 through the route 10 may be refracted in the second direction, i.e., the direction of a route 11 as it is adjusted to a right-circularly polarization. Accordingly, the light may be provided in a direction of the predetermined eyebox 20 along the direction of the route 11.

In conclusion, according to the embodiment in FIG. 2, limited to a case wherein a polarization of a light emitted through the plurality of projection units 110, 120 is a left-circularly polarization, the light may ultimately be provided in a direction toward a predetermined location , i.e., the direction toward the eyebox 20, and in case a polarization of a light emitted through the plurality of projection units 110, 120 is a right-circularly polarization, the light may be provided in a direction that is not toward the eyebox 20.

According to the conventional technology, a 3D image was provided by diffusing a light reflected on the screen 200 in a wide angle by using a diffuser, and thus there was a limitation on the brightness of the light toward both eyes of the user.

In contrast, as described above, in the display system 1000 according to the disclosure, the geometric phase layer 210 is coupled to the screen 200 including the retroreflection layer 220, and thus a light reflected on the screen 200 can be made to be focused on an area corresponding to both eyes of the user without dedicated glasses or an additional device. Accordingly, the display system 1000 can provide a 3D image that is noticeably bright compared to the conventional technology to the user.

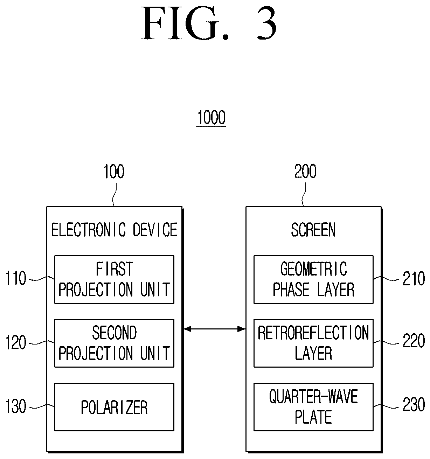

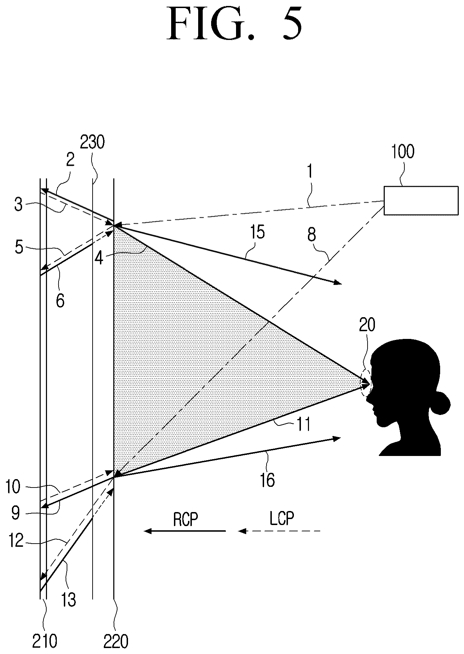

FIG. 3 is a block diagram illustrating in detail a configuration of the display system 1000 according to an embodiment of the disclosure, FIG. 4 is a diagram illustrating a moving route of a light wherein the electronic device 100 further includes a polarizer according to an embodiment of the disclosure, and FIG. 5 is a diagram illustrating a route of a light wherein the screen 200 further includes a quarter-wave plate according to an embodiment of the disclosure.

First, hereinafter, an embodiment will be illustrated with reference to FIG. 4 together with FIG. 3. Referring to FIGS. 3 and 4, the electronic device 100 may further include a polarizer 130 as well as the first projection unit 110 and the second projection unit 120.

'The polarizer 130' refers to a component that can filter a light such that a light of a specific polarization is not emitted. The polarizer 130 may be arranged in a direction toward the screen 200 from the plurality of projection units 110, 120 such that a light emitted from the plurality of projection units 110, 120 can be incident.

According to an embodiment, the polarizer 130 may filter a light of the second polarization emitted from the plurality of projection units 110, 120. That is, the electronic device 100 may filter a light of the second polarization which is a specific polarization among lights emitted from the plurality of projection units 110, 120 by using the polarizer 130, and emit only a light of the first polarization toward the screen 200.

Hereinafter, the embodiment of FIG. 4 will be explained based on the premise of a case wherein the first polarization is a left-circularly polarization, and the second polarization is a right-circularly polarization as in the explanation regarding FIG. 2.

As illustrated in FIG. 4, a light emitted from the plurality of projection units 110, 120 may be filtered by the polarizer 130, and may then be incident into the geometric phase layer 210 through the route 1. As the light of the second polarization, i.e., a right-circularly polarization was filtered by the polarizer 130, the polarization of the light incident into the geometric phase layer 210 through the route 1 may be a left-circularly polarization, and accordingly, the light incident into the geometric phase layer 210 through the route 1 may be refracted in the first direction, i.e., the direction of the route 2 as it is adjusted to a right-circularly polarization. The light incident into the retroreflection layer 220 through the route 2 may be reflected in the direction of the route 3 as it is adjusted to a left-circularly polarization by the retroreflection layer 220. The light incident into the geometric phase layer 210 through the route 3 may be refracted in the second direction, i.e., the direction of the route 4 as it is adjusted to a right-circularly polarization. Accordingly, the light may be provided in a direction toward the predetermined eyebox 20 along the direction of the route 4.

As illustrated in FIG. 4, a light emitted from the plurality of projection units 110, 120 may be filtered by the polarizer 130, and may then be incident into the geometric phase layer 210 through the route 8. As a light of the second polarization, i.e., a right-circularly polarization was filtered by the polarizer, the polarization of the light incident into the geometric phase layer 210 through the route 8 may be a left-circularly polarization, and accordingly, the light incident into the geometric phase layer 210 through the route 8 may be refracted in the first direction, i.e., the direction of the route 9 as it is adjusted to a right-circularly polarization. The light incident into the retroreflection layer 220 through the route 9 may be reflected in the direction of the route 10 as it is adjusted to a left-circularly polarization by the retroreflection layer 220. The light incident into the geometric phase layer 210 through the route 10 may be refracted in the second direction, i.e., the direction of the route 11 as it is adjusted to a right-circularly polarization. Accordingly, the light may be provided in a direction toward the predetermined eyebox 20 along the direction of the route 11.

Meanwhile, as the light of the second polarization, i.e., a right-circularly polarization was filtered by the polarizer 130, the light incident into the geometric phase layer 210 through the route 1 may not be refracted in the third direction, i.e., the direction of the route 5 in FIG. 2, and accordingly, the light may not ultimately be refracted in the fourth direction, i.e., the direction of the route 7 in FIG. 2.

Also, as the light of the second polarization, i.e., a right-circularly polarization was filtered by the polarizer 130, the light incident into the geometric phase layer 210 through the route 8 may not be refracted in the third direction, i.e., the direction of the route 12 in FIG. 2, and accordingly, the light may not ultimately be refracted in the fourth direction, i.e., the direction of the route 14 in FIG. 2.

According to the embodiment described above with reference to FIGS. 3 and 4, in the display system 1000, a light of a specific polarization is filtered by using the polarizer 130, and thus the ratio that a light reflected by the screen 200 is provided in a direction that is not toward the location of the eyebox 20 is reduced, and accordingly, noise regarding an image provided to the user can be noticeably reduced.

Next, hereinafter, an embodiment will be explained with reference to FIG. 5 together with FIG. 3. As illustrated in FIGS. 3 and 5, the screen 200 may further include a quarter-wave plate (QWP) as well as the geometric phase layer 210 and the retroreflection layer 220.

'A quarter-wave plate 230' refers to a component that can adjust a polarization of a light incident in a specific direction. Specifically, the quarter-wave plate 230 may include 'a first quarter-wave plate' that adjusts a polarization of a light incident from the retroreflection layer 220 and 'a second quarter-wave plate' that adjusts a polarization of a light incident from the geometric phase layer 210. Also, the quarter-wave plate 230 may be arranged between the geometric phase layer 210 and the retroreflection layer 220.

According to an embodiment, the screen 200 may further include the first quarter-wave plate 230. Also, if a polarization of a light incident into the first quarter-wave plate 230 after being reflected by the retroreflection layer 220 is the second polarization, the polarization of the light incident into the first quarter-wave plate 230 may be adjusted to the first polarization, and the light incident into the geometric phase layer 210 after being adjusted to the first polarization by the first quarter-wave plate 230 may be refracted in the fifth direction similar to the second direction.

Referring to FIG. 5, if the polarization of the light incident into the geometric phase layer 210 through the route 1 is a right-circularly polarization, the light incident into the geometric phase layer 210 through the route 1 may be refracted in the third direction, i.e., the direction of the route 5 as it is adjusted to a left-circularly polarization. The light incident into the retroreflection layer 220 through the route 5 may be reflected in the direction of the route 6 as it is adjusted to a right-circularly polarization by the retroreflection layer 220. The light incident into the first quarter-wave plate 230 through the route 6 after being reflected by the retroreflection layer 220 may be incident into the geometric phase layer 210 through the route 6 as it is adjusted to a left-circularly polarization. The light incident into the geometric phase layer 210 through the route 6 may be refracted in the fifth direction similar to the second direction as it is adjusted to a right-circularly polarization. Accordingly, the light may be provided in the direction of a route 15 similar to the direction of the route 4.

Here, 'the fifth direction' generally refers to a direction similar to the second direction that is toward the eyebox 20 rather than the fourth direction that is not toward the predetermined eyebox 20. Depending on embodiments, the fifth direction may coincide with the second direction.

In other words, in case the polarization of the light reflected by the retroreflection layer 220 is not adjusted to a left-circularly polarization by the first quarter-wave plate 230, and the light is incident into the geometric phase layer 210 in the state of a right-circularly polarization, the light ultimately provided through the screen 200 may be refracted in the fourth direction, i.e., the direction of the route 7 in FIG. 2. In contrast, in case the polarization of the light reflected by the retroreflection layer 220 is adjusted to a left-circularly polarization by the first quarter-wave plate 230, and then the light is incident into the geometric phase layer 210, the light ultimately provided through the screen 200 may be refracted in the fifth direction, i.e., the direction of the route 15.

As illustrated in FIG. 5, if the polarization of the light incident into the geometric phase layer 210 through the route 8 is a right-circularly polarization, the light incident into the geometric phase layer 210 through the route 8 may be refracted in the third direction, i.e., the direction of the route 12 as it is adjusted to a left-circularly polarization. The light incident into the retroreflection layer 220 through the route 12 may be reflected in the direction of the route 13 as it is adjusted to a right-circularly polarization by the retroreflection layer 220. The light incident into the first quarter-wave plate 230 through the route 13 after being reflected by the retroreflection layer 220 may be incident into the geometric phase layer 210 through the route 13 as it is adjusted to a left-circularly polarization. The light incident into the geometric phase layer 210 through the route 13 may be refracted in the fifth direction similar to the second direction as it is adjusted to a right-circularly polarization. Accordingly, the light may be provided in the direction of a route 16 similar to the direction of the route 11.

In other words, in case the polarization of the light reflected by the retroreflection layer 220 is not adjusted to a left-circularly polarization by the first quarter-wave plate 230, and the light is incident into the geometric phase layer 210 in the state of a right-circularly polarization, the light ultimately provided through the screen 200 may be refracted in the fourth direction, i.e., the direction of the route 14 in FIG. 2, but in case the polarization of the light reflected by the retroreflection layer 220 is adjusted to a left-circularly polarization by the first quarter-wave plate 230, and then the light is incident into the geometric phase layer 210, the light ultimately provided through the screen 200 may be refracted in the fifth direction, i.e., the direction of the route 16.

Meanwhile, according to an embodiment, the screen 200 may further include a second quarter-wave plate. Also, if a polarization of a light incident into the second quarter-wave plate 230 after being refracted by the geometric phase layer 210 is the first polarization, the polarization of the light incident into the second quarter-wave plate 230 may be adjusted to the second polarization, and the light adjusted to the second polarization by the second quarter-wave plate 230 may be reflected in an opposite direction to the third direction as it is adjusted to the first polarization by the retroreflection layer 220, and the light reflected in an opposite direction to the third direction by the retroreflection layer 220 may be refracted in the fifth direction as it is adjusted to the second polarization by the geometric phase layer 210.

In FIG. 5, a case wherein the quarter-wave plate 230 is the first quarter-wave plate 230 that adjusts a polarization of a light incident from the retroreflection layer 220 was illustrated, but hereinafter, explanation will be described based on the premise of a case wherein the quarter-wave plate 230 is the second quarter-wave plate that adjusts a polarization of a light incident from the geometric phase layer 210, while FIG. 5 is referred to.

If the polarization of the light incident into the geometric phase layer 210 through the route 1 is a right-circularly polarization, the light incident into the geometric phase layer 210 through the route 1 may be refracted in the third direction, i.e., the direction of the route 5 as it is adjusted to a left-circularly polarization. The light incident into the second quarter-wave plate 230 through the route 5 may be incident into the retroreflection layer 220 through the route 5 as it is adjusted to a right-circularly polarization. The light incident into the retroreflection layer 220 through the route 5 may be reflected in the direction of the route 6 as it is adjusted to a left-circularly polarization by the retroreflection layer 220. The light incident into the geometric phase layer 210 through the route 6 may be refracted in the fifth direction similar to the second direction as it is adjusted to a right-circularly polarization. Accordingly, the light may be provided in the direction of the route 15 similar to the direction of the route 4.

In other words, in case the light emitted from the plurality of projection units 110, 120 passes through the geometric phase layer 210 and is then incident into the retroreflection layer 220 in the state of a left-circularly polarization without being adjusted to a right-circularly polarization by the second quarter-wave plate 230, the light ultimately provided through the screen 200 may be refracted in the fourth direction, i.e., the direction of the route 7 in FIG. 2. In contrast, in case the light emitted from the plurality of projection units 110, 120 passes through the geometric phase layer 210 and is adjusted to a right-circularly polarization by the second quarter-wave plate 230, and is then incident into the retroreflection layer 220, the light ultimately provided through the screen 200 may be refracted in the fifth direction, i.e., the direction of the route 15.

In case the polarization of the light incident into the geometric phase layer 210 through the route 8 is a right-circularly polarization, the light incident into the geometric phase layer 210 through the route 8 may be refracted in the third direction, i.e., the direction of the route 12 as it is adjusted to a left-circularly polarization. The light incident into the second quarter-wave plate 230 through the route 12 may be incident into the retroreflection layer 220 through the route 12 as it is adjusted to a right-circularly polarization. The light incident into the retroreflection layer 220 through the route 12 may be reflected in the direction of the route 13 as it is adjusted to a left-circularly polarization by the retroreflection layer 220. The light incident into the geometric phase layer 210 through the route 13 may be refracted in the fifth direction similar to the second direction as it is adjusted to a right-circularly polarization. Accordingly, the light may be provided in the direction of the route 16 similar to the direction of the route 11.

In other words, in case the light emitted from the plurality of projection units 110, 120 passes through the geometric phase layer 210, and is then incident into the retroreflection layer 220 in the state of a left-circularly polarization without being adjusted to a right-circularly polarization by the second quarter-wave plate 230, the light ultimately provided through the screen 200 may be refracted in the fourth direction, i.e., the direction of the route 14 in FIG. 2. In contrast, in case the light emitted from the plurality of projection units 110, 120 passes through the geometric phase layer 210 and is adjusted to a right-circularly polarization by the second quarter-wave plate 230, and is then incident into the retroreflection layer 220, the light ultimately provided through the screen 200 may be refracted in the fifth direction, i.e., the direction of the route 16.

Meanwhile, in the above, an embodiment wherein the quarter-wave plate 230 is arranged between the geometric phase layer 210 and the retroreflection layer 220 was explained, but there is no special limitation on the location of the quarter-wave plate 230 if a light is not made to be ultimately provided in a direction that is not toward the eyebox 20 (the directions of the route 7 and the route 14 in FIG. 5), but the light can be made to be provided in a direction that is toward the eyebox 20 and a direction similar to it (the directions of the route 15 and the route 16 in FIG. 5) instead by changing the polarization of the incident light to the opposite.

Meanwhile, the quarter-wave plate 230 may be used together with a polarizing plate that filters a light of a specific polarization. That is, depending on embodiments, the quarter-wave plate 230 may change a polarization of a light to be opposite, and then the light of the changed polarization may be filtered at the polarizing plate, and the light may ultimately be made to be provided in a direction toward the eyebox 20 and a direction similar to it.

According to the embodiment described above with reference to FIGS. 3 and 5, a light of a specific polarization may be changed to an opposite direction by the quarter-wave plate 230, and a light in a similar direction to a direction toward the eyebox 20 instead of a direction not toward the eyebox 20 may ultimately be made to be provided. Accordingly, noise regarding an image can be reduced noticeably.

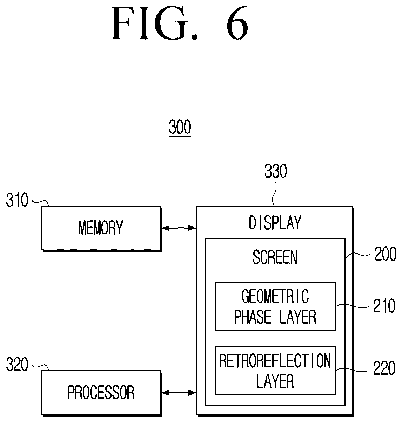

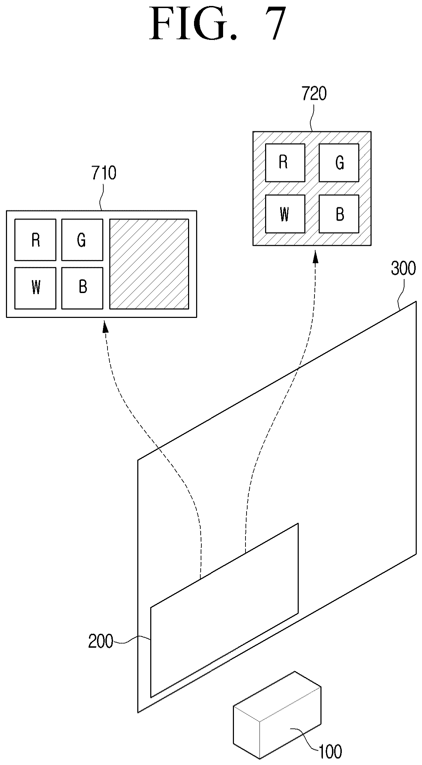

FIG. 6 is a block diagram schematically illustrating a configuration of a display device according to an embodiment of the disclosure, and FIG. 7 is a diagram illustrating arrangement of a screen on a display included in the display device 300 according to an embodiment of the disclosure. Hereinafter, various embodiments will be described with reference to FIGS. 6 and 7 together.

The display system 1000 according to the disclosure may further include a display device 300. Here, 'the display device 300' refers to a device that includes a display 330 and can display an image. For example, the display device 300 may be a 2D TV that can display a 2D image, but is not limited thereto.

Referring to FIG. 6, the display device 300 may include memory 310, a processor 320, and a display 330. However, the components as illustrated in FIG. 6 are in implementing the disclosure, it is obvious that new components can be added in addition to the components as illustrated in FIG. 6, or some components can be omitted.

In the memory 310, at least one instruction regarding the electronic device 100 may be stored. Also, in the memory 310, an operating system (O/S) for operating the electronic device 100 may be stored. In addition, in the memory 310, various types of software programs or applications for making the electronic device 100 operate according to the various embodiments of the disclosure may be stored. Further, the memory 310 may include a semiconductor memory 310 such as a flash memory 310, etc., or a magnetic storage medium such as a hard disk, etc.

Specifically, in the memory 310, various kinds of software modules for the electronic device 100 to operate according to the various embodiments of the disclosure may be stored, and the processor 320 may control the operations of the electronic device 100 by executing the various kinds of software modules stored in the memory 310. That is, the memory 310 may be accessed by the processor 320, and reading/recording/correction/deletion/update, etc. of data by the processor 320 may be performed.

Meanwhile, in the disclosure, the term memory 310 may be used as a meaning including the memory 310, read only memory (ROM) and random access memory (RAM) inside the processor 320, or a memory 310 card (e.g., a micro secure digital (SD) card, a memory 310 stick) installed on the electronic device 100.

In particular, in an embodiment, in the memory 310, image data corresponding to an image displayed on the display 330 may be stored. Other than this, various kinds of information necessary within a range for achieving the purpose of the disclosure may be stored in the memory 310, and the information stored in the memory 310 may be updated as it is received from an external device or is input by the user.

The processor 320 controls the overall operations of the electronic device 100. Specifically, the processor 320 may be connected to the components of the electronic device 100 including the display 330 and the memory 310, and may control the overall operations of the electronic device 100 by executing the at least one instruction stored in the memory 310 as described above.

The processor 320 may be implemented in various ways. For example, the processor 320 may be implemented as at least one of an application specific integrated circuit (ASIC), an embedded processor 320, a microprocessor 320, a hardware control logic, a hardware finite state machine (FSM), or a digital signal processor 320 (DSP). Meanwhile, in the disclosure, the term processor 320 may be used as a meaning including a central processing unit (CPU), a graphics processing unit (GPU), and a micro processor unit (MPU), etc.

In particular, in an embodiment, the processor 320 may control the display 330 to display an image based on image data stored in the memory 310. Also, in case a light for providing a 3D image is emitted from the plurality of projection units 110, 120 of the electronic device 100, the processor 320 may control the display 330 to provide information on the 3D image projected on the screen 200 in some areas of the display 330.

The display 330 may display an image. Specifically, the display 330 may output an image corresponding to the image data stored in advance in the memory 310 by control by the processor 320. Also, the display 330 may display a user interface stored in the memory 310. The display 330 may be implemented as a liquid crystal display (LCD) panel, organic light emitting diodes (OLED), etc. Also, the display 330 can be implemented as a flexible display 330, a transparent display 330, etc. depending on cases. However, the display 330 according to the disclosure is not limited to a specific type.

In particular, in an embodiment, the display 330 may include the screen 200 according to the disclosure. That is, the screen 200 according to the disclosure may be attached on a wall or an object in a viewing space, and in particular, the screen 200 may be attached on the display device 300 among objects. Specifically, the screen 200 according to the disclosure may be arranged in at least some areas of the display 330 included in the display device 300. Meanwhile, the screen 200 may also be arranged inside the display 330, or may be attached on the surface of the display 330.

Referring to FIG. 7, the screen 200 may be arranged in some areas of the display 330 included in the display device 300. However, the disclosure is not limited thereto, and in particular, in case the display 330 is implemented as a transparent display 330, the screen 200 may be arranged in the entire areas of the display 330.

Meanwhile, the at least some areas of the display 330 wherein the screen 200 is arranged may be included in an area wherein a black matrix (BM) is formed in the display 330. Specifically, the display 330 may include an R sub-pixel indicating a red color, a G sub-pixel indicating a green color, a B sub-pixel indicating a blue color, and a W sub-pixel indicating a white color as illustrated in 710 or 720 of FIG. 7, and may include a black matrix which is a black area arranged around each sub-pixel and blocks a light between each sub-pixel as the slashed area in 710 or 720 of FIG. 7. Also, the screen 200 may be arranged in the area wherein such a black matrix is formed.

According to the embodiment described above with reference to FIG. 7, in the display system 1000, the screen 200 including the geometric phase layer 210 and the retroreflection layer 220 according to the disclosure is arranged on the display 330 of the display device 300, and accordingly, in the case of providing a 2D image, the 2D image may be displayed by using the display 330, and in the case of providing a 3D image, the 3D image may be provided by projecting a light emitted by the electronic device 100 on the screen 200 arranged on the display 330.

In particular, according to the embodiment in FIG. 7, as the user is equipped with the display device 300 on which the screen 200 according to the disclosure is mounted, the user can be effectively provided with a 2D image and a 3D image without having to prepare the screen 200 for projecting an image separately and arranging it in a separate space. Also, if a spare space of the display 330 such as a black matrix is used when implementing the screen 200 on the display device 300, the display system 1000 can be implemented more effectively.

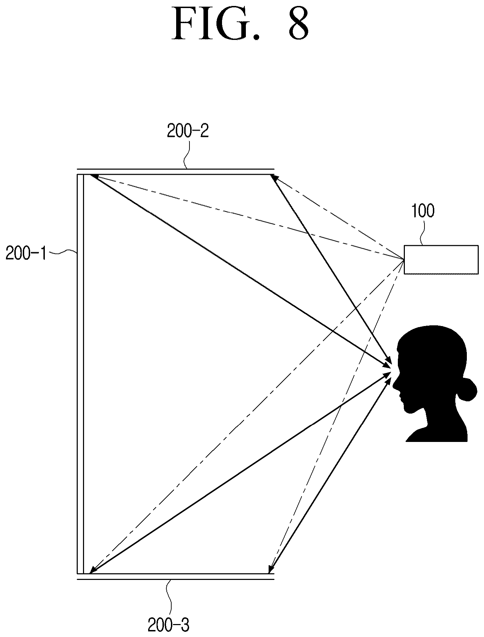

FIG. 8 is a diagram illustrating arrangement of a screen on a plurality of wall surfaces constituting a viewing space of a user according to an embodiment of the disclosure.

In the above, various embodiments were explained based on the premise that the screen 200 according to the disclosure is arranged on the front surface of the electronic device 100. However, in case the screen 200 is arranged only on the front surface of the electronic device 100, because of the characteristics of the retroreflection layer 220 and the geometric phase layer 210, the screen 200 is optimized for a light that is incident in 90 degrees, and in general, may reflect a light that is incident in angles of ± 30 degrees in a direction toward the eyebox 20. That is, in case the screen 200 is arranged only on the front surface of the electronic device 100, it may be difficult to effectively provide a light that is incident in angles of greater than ± 30 degrees in a direction toward the eyebox 20.

In contrast, if the screen 200 is arranged not only on the front surface of the electronic device 100, but also on the left side surface, the right side surface, the ceiling surface, and the bottom surface, etc., lights in various angles emitted from the electronic device 100 may be effectively reflected, and the lights may be provided in a direction toward the eyebox 20. Thus, according to an embodiment of the disclosure, the screen 200 may be arranged on at least two surfaces among the front surface, the left side surface, the right side surface, the ceiling surface, and the bottom surface of the electronic device 100.

For example, referring to FIG. 8, the screen 200 may include a first screen 200-1 arranged on the front surface of the electronic device 100, a second screen 200-2 arranged on the ceiling surface, and a third screen 200-3 arranged on the bottom surface. Also, all of each of the first screen 200-1, the second screen 200-2, and the third screen 200-3 may include the geometric phase layer 210 and the retroreflection layer 220 according to the disclosure. In addition, as illustrated in the dotted line in FIG. 8, if a light for providing an image is emitted from the electronic device 100, the screen 200 may reflect the light such that the light is converged in a direction toward the eyebox 20 as illustrated in the dashed line in FIG. 8, and provide the light.

Obviously, in a case wherein the screen 200 is arranged not only on the front surface of the electronic device 100, but also on the left side surface, the right side surface, the ceiling surface, and the bottom surface, etc., it is necessary to design the display system 1000 in consideration of an incident angle of a light optimized for each of the plurality of screens of the screen 200. In particular, an incident angle of a light optimized for each of the plurality of screens of the screen 200 may be determined based on at least one of a form, a size, or an interval of a pattern formed on the geometric phase layer 210 and the retroreflection layer 220 as described above.

According to the embodiment described above with reference to FIG. 8, as a plurality of screens of the screen 200 that can focus lights to the eyebox 20 are installed in the entire viewing space of the user, a space and an image may be matched, and accordingly, the user's sense of immersion for the image can be noticeably improved.

Meanwhile, the screen 200 according to the disclosure includes the retroreflection layer 220 together with the geometric phase layer 210, and thus it is equipped with not only a function (or a characteristic) of refracting a light emitted from the electronic device 100 in a direction toward a predetermined location and providing the light but also a function of reflecting a light emitted from the electronic device 100. Also, as the luminance of a light emitted from the electronic device 100 become higher, the ratio that the function of reflecting the light emitted from the electronic device 100 is exerted may be increased more than the function of refracting the light emitted from the electronic device 100 in a direction toward the predetermined location. In contrast, as the luminance of a light emitted from the electronic device 100 becomes lower, the function of refracting the light emitted from the electronic device 100 in a direction toward the predetermined location may be emphasized more than the function of reflecting the light emitted from the electronic device 100.

Accordingly, the electronic device 100 may control the luminance of a light emitted by the plurality of projection units 110, 120 differently in a case for providing a 2D image and a case for providing a 3D image. That is, if a request for providing a 2D image is received, the electronic device 100 may emit a light of a higher luminance than in a case of providing a 3D image, and if a request for providing a 3D image is received, the electronic device 100 may emit a light of a lower luminance than in a case of providing a 2D image.

Meanwhile, in the above, an embodiment wherein the display system 1000 includes only one of a device including the plurality of projection units 110, 120, i.e., the electronic device 100 was explained, but the disclosure is not limited thereto.

That is, the display system 1000 may further include an external device including a plurality of external projection units emitting a light corresponding to a 3D image, as well as the electronic device 100. Also, the plurality of external projection units may include a first external projection unit that emits a light for providing to a left eye of a second user and a second external projection unit that emits a light for providing to a right eye of the second user, and the external device may be arranged in a location different from the electronic device 100.

Also, the screen 200 may be implemented such that, if a light emitted from the electronic device 100 arranged in a first location is incident, the light is made to be ultimately provided to a direction toward the eyebox 20 of the first user, and if a light emitted from the external device arranged in a second location is incident, the light is made to be ultimately provided to a direction toward the eyebox 20 of the second user. In other words, the various embodiments according to the disclosure can be applied in the same manner to a case for providing a 3D image that is noticeably bright compared to the conventional technology to both eyes of a plurality of users.

Meanwhile, the control method of the electronic device 100 and/or the control method of the display device 300 according to the aforementioned embodiments may be implemented as programs and provided to the electronic device 100. In particular, programs including the control method of the electronic device 100 and/or the control method of the display device 300 may be provided while being stored in a non-transitory computer readable medium.

A storage medium that is readable by machines may be stored in the form of a non-transitory storage medium. Here, the term 'a non-transitory storage medium' only means that a storage medium is a tangible device, and does not include a signal (e.g.: an electromagnetic wave), and the term does not distinguish a case wherein data is stored in the storage medium semi-permanently and a case wherein data is stored temporarily. For example, 'a non-transitory storage medium' may include a buffer wherein data is temporarily stored.

According to an embodiment, methods according to the various embodiments disclosed herein may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or distributed directly on-line (e.g.: download or upload) through an application store (e.g.: Play Store^{™}), or between two user devices (e.g.: smartphones). In the case of on-line distribution, at least a portion of a computer program product (e.g.: a downloadable app) may be stored in a storage medium readable by machines such as the server of the manufacturer, the server of the application store, and the memory 310 of the relay server at least temporarily, or may be generated temporarily.

Also, each of the components (e.g.: a module or a program) according to the aforementioned various embodiments of the disclosure may consist of a singular object or a plurality of objects. In addition, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner.

In addition, operations performed by a module, a program, or other components according to the various embodiments may be executed sequentially, in parallel, repetitively, or heuristically. Or, at least some of the operations may be executed in a different order or omitted, or other operations may be added.

Meanwhile, the term "a part" or "a module" used in the disclosure may include a unit implemented as hardware, software, or firmware, and may be interchangeably used with, for example, terms such as a logic, a logical block, a component, or a circuit. Also, "a part" or "a module" may be a component constituted as an integrated body or a minimum unit or a part thereof performing one or more functions. For example, a module may be constituted as an application-specific integrated circuit (ASIC).

Further, the various embodiments of the disclosure may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments (e.g.: the electronic device 100).

In case an instruction is executed by a processor, the processor may perform a function corresponding to the instruction by itself, or by using other components under its control. An instruction may include a code that is generated or executed by a compiler or an interpreter.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A display system comprising:
an electronic device including a plurality of projectors emitting a light for providing a three-dimensional (3D) image; and
a screen comprising a geometric phase layer and a retroreflection layer, the geometric phase layer refracts light incident from the plurality of projectors in different directions according to a polarization of the light and the retroreflection layer reflects light incident from the geometric phase layer in an opposite direction to an incident direction,
wherein, based on the polarization of the light emitted from the plurality of projectors being a first polarization from among a right-circularly polarization and a left-circularly polarization, the emitted light is refracted in a first direction by the geometric phase layer, the light refracted in the first direction is reflected in an opposite direction to the first direction by the retroreflection layer, and the reflected light is refracted in a second direction toward a predetermined location corresponding to both eyes of a user by the geometric phase layer, and
wherein, based on the polarization of the light emitted from the plurality of projectors being a second polarization, the emitted light is refracted in a third direction different from the first direction by the geometric phase layer, the light refracted in the third direction is reflected in an opposite direction to the third direction by the retroreflection layer, and the reflected light is refracted in a fourth direction different from the second direction by the geometric phase layer.

2. The display system of claim 1,
wherein, based on the polarization of the light emitted from the plurality of projectors being the first polarization, the emitted light is refracted in the first direction as it is changed to the second polarization by the geometric phase layer, the light refracted in the first direction is reflected in the opposite direction to the first direction as it is changed to the first polarization by the retroreflection layer, and the reflected light is refracted in the second direction toward the predetermined location corresponding to both eyes of the user as it is changed to the second polarization by the geometric phase layer, and
wherein, based on the polarization of the light emitted from the plurality of projectors being the second polarization, the emitted light is refracted in the third direction as it is changed to the first polarization by the geometric phase layer, the light refracted in the third direction is reflected in the opposite direction to the third direction as it is changed to the second polarization by the retroreflection layer, and the reflected light is refracted in the fourth direction as it is changed to the first polarization by the geometric phase layer.

3. The display system of claim 1, wherein the electronic device further comprises:
a polarizer that filters light of the second polarization emitted from the plurality of projectors.

4. The display system of claim 1,
wherein the screen further comprises:
a first quarter-wave plate (QWP) that is arranged between the geometric phase layer and the retroreflection layer and adjusts the polarization of the light incident from the retroreflection layer,
wherein, based on the polarization of light incident into the first quarter-wave plate after being reflected by the retroreflection layer being the second polarization, the polarization of the light incident into the first quarter-wave plate is adjusted to the first polarization, and
wherein light incident into the geometric phase layer after being adjusted to the first polarization by the first quarter-wave plate is refracted in a fifth direction similar to the second direction.

5. The display system of claim 1,
wherein the screen further comprises:
a second quarter-wave plate that is arranged between the geometric phase layer and the retroreflection layer and adjusts the polarization of the light incident from the geometric phase layer,
wherein, based on the polarization of light incident into the second quarter-wave plate after being refracted by the geometric phase layer being the first polarization, the polarization of the light incident into the second quarter-wave plate is adjusted to the second polarization,
wherein the light adjusted to the second polarization by the second quarter-wave plate is reflected in the opposite direction to the third direction as it is adjusted to the first polarization by the retroreflection layer, and
wherein the light reflected in the opposite direction to the third direction by the retroreflection layer is refracted in a fifth direction similar to the second direction as it is adjusted to the second polarization by the geometric phase layer.

6. The display system of claim 1, wherein the first direction, the second direction, the third direction, and the fourth direction are set based on at least one of a form, a size, or an interval of a pattern formed on the geometric phase layer.

7. The display system of claim 1,
wherein the predetermined location corresponds to an eyebox that is an area corresponding to both eyes of the user, and
wherein a location, a size, and a form of the eyebox are set based on at least one of a focal distance of a lens included in the electronic device, an optical aberration of the lens, or a size of an aperture included in the electronic device.

8. The display system of claim 7, wherein the location, the size, and the form of the eyebox are further set based on at least one of a form, a size, or an interval of a pattern formed on the retroreflection layer.

9. The display system of claim 1, further comprising:
a display device that displays an image,
wherein the screen is arranged on at least some areas of a display included in the display device.

10. The display system of claim 9, wherein the at least some areas are included in an area wherein a black matrix is formed on the display.

11. The display system of claim 1, wherein the screen is arranged on at least two surfaces from among a front surface, a left side surface, a right side surface, a ceiling surface, and a bottom surface of the electronic device.

12. The display system of claim 1, wherein the electronic device is configured to:
based on receiving a request for providing a two-dimensional (2D) image, emit a light of a higher luminance than in a case of providing the 3D image.

13. The display system of claim 1, wherein the plurality of projectors comprise:
a first projector that emits a light for providing to a left eye of a first user; and
a second projector that emits a light for providing to a right eye of the first user.

14. The display system of claim 1, further comprising:
an external device including a plurality of external projectors that emit a light corresponding to the 3D image,
wherein the plurality of external projectors include a first projector that emits a light for providing to a left eye of a second user and a second projector that emits a light for providing to a right eye of the second user, and
wherein the external device is arranged in a different location from the electronic device.

15. A display device comprising:
a display;
memory storing at least one instruction; and
one or more processors communicatively coupled to the display and the memory,
wherein the display includes a screen that is arranged in at least some areas of the display and includes a geometric phase layer and a retroreflection layer, the geometric phase layer refracts a light incident from a plurality of projectors included in an electronic device in different directions according to a polarization of the light and the retroreflection layer reflects light incident from the geometric phase layer in an opposite direction to an incident direction,
wherein, based on the polarization of the light emitted from the plurality of projectors being a first polarization from among a right-circularly polarization and a left-circularly polarization, the emitted light is refracted in a first direction by the geometric phase layer, the light refracted in the first direction is reflected in an opposite direction to the first direction by the retroreflection layer, and the reflected light is refracted in a second direction toward a predetermined location corresponding to both eyes of a user by the geometric phase layer, and
wherein, based on the polarization of the light emitted from the plurality of projectors being a second polarization, the emitted light is refracted in a third direction different from the first direction by the geometric phase layer, the light refracted in the third direction is reflected in an opposite direction to the third direction by the retroreflection layer, and the reflected light is refracted in a fourth direction different from the second direction by the geometric phase layer.
